# EUROPEAN PATENT SPECIFICATION

(11) **EP 2 049 454 B1**
(45) Date of publication and mention of the grant of the patent: **09.03.2011**
(21) Application number: 07805739.5
(22) Date of filing: 26.07.2007
(51) Int. Cl.: C04B 41/45, C04B 41/85, C04B 28/00

(54) **AN ENGOBE FOR THE FASHIONING OF CERAMIC AND EARTHENWARE ARTICLES AND A METHOD OF APPLICATION**
ENGOBE FÜR DIE BEARBEITUNG VON KERAMIK- UND TONWAREN SOWIE ANWENDUNGSVERFAHREN
ENGOBE POUR LA FABRICATION D'ARTICLES EN CÉRAMIQUE ET POTERIES ET PROCÉDÉ D'APPLICATION

(30) Priority: 28.07.2006 IT CZ20060020
(43) Date of publication of application: 22.04.2009
(73) Proprietor: Ierinò, Domenico, 89042 Gioiosa Ionica (IT)
(72) Inventor: Ierinò, Domenico, 89042 Gioiosa Ionica (IT)
(74) Representative: Perrotta, Aldo
(86) International application number: PCT/IT2007/000527
(87) International publication number: WO 2008/012860

(56) References cited:
- DE-A1- 4 037 650
- DATABASE WPI Week 197547 Derwent Publications Ltd., London, GB; AN 1975-77751W XP002458788 & JP 50 060531 A (NIPPON SYNTHETIC CHEM IND CO) 24 May 1975 (1975-05-24)

## Description

### Field of the Technique

The present invention regards an engobe and a method of application for fashioning ceramic and earthenware articles, in order to create a covering, which allows one to obtain, by baking in an oven at between 900° C and 960° C, an ageing of the article of the archaeological type.

### State of the Technique

The method of covering ceramic or earthenware articles with a layer of material to give said articles an antique look has been used by diverse makers: the patent DE 4037650 describes a method for the application of a synthetic resin onto the surface of a ceramic article.

The material in particles, preferably mineral or glass powder is blown directly onto the article after having heated the resin. The method is used for the production of vases and creates a finishing layer on the ceramic article that appears antique.

Another method is described in the request for a patent W00001774, in which a composite powder covering comprises a film constituted by a polymeric component with a thickness of between 25 and 70 microns, and with said composite incorporates an additive component to create an antique-type finishing layer.

This method also uses components that are not of the same nature as the ceramic or the earthenware and are distinguishable to the naked eye. In this way the coverings created both with the method DE 4037650 and with the method W00001774, which want to seem antique, are barely credible in that the antique-type coverings that they create, being of real resin or with a polymeric component, are different to the material of which the article is constituted.

### A Description of the Invention

In the working of ceramics and earthenware the engobe method, which allows one to cover the object with a paste of clay mixed with other elements, has always existed.

The engobe object of the present invention has never existed before, nor has it been used by others.

The engobe object of the present invention allows one to obtain, by baking in a kiln at between 900° C and 960° C, a particular ageing, of the archaeological type, of the article.

The engobe object of the present invention, the result of continuous trials and retrials over numerous years, consists in the formation of the paste of the slip with components that have never been assembled by others.

The engobe that has been created comes from a sapient dosing of clay, sand in fine granules, preferably of the type used in mortar, and marble dust.

The marble dust, with a baking procedure at 940° C, has never been used by any artisan in the ceramics sector nor is there any trace in any of the teachings of the Ceramics Schools.

Furthermore, the singularity of the engobe object of the present invention consists of the various and ordered passages for the phases of working that constitute the method of application of the engobe.

### A detailed description of a method of creating the invention

The engobe object of the present invention is constituted by marble dust, clay diluted in water and fine-grained sand, preferably of the type used in mortar.

The method of application of an engobe on an article produced by any method, for example on a wheel or by a mould, and dried, is the following: the engobe, constituted by marble dust, clay diluted in water, fine-grained sand, preferably of the type used in mortar, is applied, preferably by hand, onto the article.

The engobed articles is placed in a dryer where a first phase of desiccation takes place in such a way as to not allow the article time tn absorb the water contained in the engobe paste.

The article is baked in a kiln for ceramics at a temperature of between 900° C and 960° C.

At the end of the baking the article is placed in a covered area and dried to age the engobe. By ageing of the engobe, one means the natural and spontaneous falling away of the engobe itself in the range of 60/80 days. The ageing time varies according to the temperature and the humidity in the air during the year.

For a better result preferably a second engobe of a paste with marble dust, clay diluted in water and fine-grained sand, preferably of the type used in mortar, is applied to the article, always preferably by hand, and after the first engobe and the first desiccation. The engobed article is placed in the dryer for the second time, and where a second phase of desiccation takes place. The desiccation is carried out in such a way as to not allow the article the time to absorb the water contained in the paste of the engobe. In this way one avoids the breaking of the article itself. The article is baked in a kiln at a temperature of between 900° C and 960° C.

At the end of baking the article is placed in a covered area and dried for the ageing of the engobe. By ageing of the engobe, one means the natural and spontaneous falling away of the engobe itself in the range of 60/80 days. The ageing time varies according to the temperature and the humidity in the air during the year.

Once the engobe has fallen away, the article is washed by a jet of high-pressured water and allowed to dry. At this point the article is finished.

The present invention allows numerous advantages and to overcome difficulties that could not be overcome with the systems on sale at present.

## Claims

1. An engobe for working ceramic and earthenware articles **characterised by** the fact that it is constituted by marble dust, clay diluted in water and fine-grained sand.

2. An engobe for working ceramic and earthenware articles according to claim 1, **characterised by** the fact that the fine-grained sand is mortar sand.

3. A method of application of an engobe according to any of the preceding claims onto a ceramic and earthenware article, **characterised by** the fact that on said article a first engobe is applied, and that said engobed article is placed in a dryer where a first phase of desiccation takes place, that the article is baked in a ceramics kiln at a temperature of between 900° C and 960° C, that at the end of baking the article is placed in a covered area and dried to age the engobe for 60/80 days, for the natural and spontaneous falling away of the engobe.

4. A method of application of an engobe onto a ceramic or earthenware article according to claim 3, **characterised by** the fact that after the first engobe and the first desiccation a second engobe is applied to the article and a second phase of desiccation in a dryer is carried out.

5. A method of applying an engobe to a ceramic or earthenware article, according to claims 4, **characterised by** the fact that both the first and the second engobe are applied by hand.

## Patentansprüche

1. Engobe für die Bearbeitung von Keramik- und Tonwaren, **dadurch gekennzeichnet, dass** diese aus Marmorstaub, in Wasser gelöstem Ton und feinkörnigem Sand besteht.

2. Engobe nach Anspruch 1, **dadurch gekennzeichnet, dass** der feinkörnige Sand Bausand ist.

3. Verfahren zum Aufbringen einer Engobe nach einem der vorhergehenden Ansprüche auf einen Gegenstand aus Keramik oder Ton, **dadurch gekennzeichnet, dass** dieser Gegenstand mit einer ersten Engobe überzogen wird, worauf dieser engobierte Gegenstand für eine erste Trocknungsphase in einen Trockner gegeben wird, dass der Gegenstand bei einer Temperatur zwischen 900° und 960° C in einem Brennofen für Keramik gebrannt wird und dass nach dem Brennen der Gegenstand in einem überdachten Raum getrocknet wird, wo die Engobe 60 bis 80 Tage altert, bis diese spontan und auf natürliche Weise abfällt.

4. Verfahren nach Anspruch 3, **dadurch gekennzeichnet, dass** nach der ersten Engobierung und der ersten Trocknung der Gegenstand mit einer zweiten Engobe überzogen und in dem Trockner eine zweite Trocknung durchgeführt wird.

5. Verfahren nach Anspruch 4, **dadurch gekennzeichnet, dass** sowohl die erste als auch die zweite Engobierung von Hand durchgeführt wird.

## Revendications

1. Engobe pour le travail d'articles de céramique et de poterie, **caractérisé en ce qu'**il est constitué d'une poussière de marbre, d'argile diluée dans de l'eau et de sable à grains fins.

2. Engobe pour le travail d'articles de céramique et de poterie selon la revendication 1, **caractérisé en ce que** le sable à grains fins est un sable de mortier.

3. Procédé d'application d'un engobe selon l'une quelconque des revendications précédentes à un article de céramique et de poterie, **caractérisé en ce qu'**un premier engobe est appliqué sur ledit article, et **en ce que** ledit article engobé est placé dans un séchoir dans lequel il se produit une première phase de dessiccation, **en ce que** l'article est cuit dans un four à céramique à une température comprise entre 900°C et 960°C, **en ce que**, à la fin de la cuisson, l'article est placé dans une zone recouverte et est séché pour faire vieillir l'engobe pendant 60/80 jours afin que l'engobe se détache naturellement et spontanément.

4. Procédé d'application d'un engobe à un article de céramique ou de poterie selon la revendication 3, **caractérisé en ce que**, après le premier engobe et la première dessiccation, un second engobe est appliqué à l'article et une seconde phase de dessiccation est effectuée dans un séchoir.

5. Procédé d'application d'un engobe à un article de céramique ou de poterie selon la revendication 4, **caractérisé en ce que** les premier et second engobes sont tous deux appliqués à la main.
